# EUROPÄISCHE PATENTSCHRIFT

(11) **EP 4 054 791 B1**
(45) Veröffentlichungstag und Bekanntmachung des Hinweises auf die Patenterteilung: **23.07.2025**
(21) Anmeldenummer: 20816385.7
(22) Anmeldetag: 08.11.2020
(51) Int. Cl.: B23Q 1/01, B23Q 16/00, B23Q 39/02, B23Q 39/04

(54) **FERTIGUNGSZELLE MIT WERKZEUGTRÄGER**
MANUFACTURING CELL COMPRISING A TOOL CARRIER
CELLULE DE FABRICATION POURVUE D'UN PORTE-OUTIL

(30) Priorität: 10.11.2019 DE 102019007762
(43) Veröffentlichungstag der Anmeldung: 14.09.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000271
(87) Internationale Veröffentlichungsnummer: WO 2021/089073

(56) Entgegenhaltungen:
- EP-A1- 0 835 720
- EP-A1- 1 810 803
- DE-A1- 10 214 554

## Beschreibung

Die Erfindung betrifft eine Fertigungszelle mit einer, einen mindestens zwei Werkzeugeinheiten tragenden Werkzeugträger aufweisenden und zwei nebeneinander liegende, in einer Längsrichtung orientierte Werkstückbahnen umfassenden Werkzeugmaschine, wobei die Werkzeugeinheiten relativ zu einem Maschinenbett der Werkzeugmaschine zumindest in einer normal zur Längsrichtung orientierten Querrichtung und in einer normal zu diesen beiden Richtungen orientierten Höhenrichtung verfahrbar ist, wobei pro Werkstückbahn mindestens ein Werkstückwagen der Werkstückbahn in der Längsrichtung entlang der Werkzeugmaschine verfahrbar ist und wobei die Werkzeugeinheit in der Längsrichtung relativ zum Maschinenbett und/oder relativ zu den Werkstückwagen verfahrbar ist.

In der FR 3 056 932 A1 ist eine Fertigungszelle offenbart. In dieser werden zwei auf miteinander gekoppelten Wagen fixierte Werkstücke gleichzeitig mittels zweier an einem Portal angeordneten Werkzeugeinheiten bearbeitet.

Die DE 102 14 554 A1 offenbart ein Bearbeitungszentrum mit einer austauschbaren Bearbeitungsvorrichtung. Die einzelnen Werkstücke werden mittels umlaufender Spannvorrichtungen auf drei parallel zueinander verlaufende Förderbänder aufgespannt.

Aus der EP 1 810 803 A1 ist eine Portal-Bearbeitungsmaschine mit zwei Werkstückbahnen für die Bearbeitung und zwei neben diesen angeordneten Zuführbahnen bekannt. Das zu bearbeitende Werkstück wird mittels einer Parallelgreifvorrichtung von der Zuführbahn auf die Werkstückbahn gehoben. Jede Bearbeitungsvorrichtung bearbeitet ein Werkstück auf einer Werkstückbahn.

Der vorliegenden Erfindung liegt die Problemstellung zugrunde, die Ausbringungsrate einer Fertigungszelle bei hoher Flexibilität zu erhöhen.

Diese Problemstellung wird mit den Merkmalen des Hauptanspruches gelöst. Dazu übergreift oder überragt der Werkzeugträger die jeweils einen Werkstückbereitstellungsbereich einer Werkstückbereitstellung und einen Arbeitsbereich der Werkzeugmaschine aufweisenden Werkstückbahnen. Jede Werkzeugeinheit ist sowohl zur Bearbeitung eines Werkstücks auf der ersten Werkstückbahn als auch zur Bearbeitung eines Werkstücks auf der zweiten Werkstückbahn einsetzbar. Jeder Werkstückwagen ist in der Längsrichtung zusätzlich entlang der Werkstückbereitstellung verfahrbar. Außerdem hat die Werkstückbereitstellung pro Werkstückbahn mindestens eine absenkbare oder abkippbare Anschlagvorrichtung.

Die Fertigungszelle hat zwei parallel zueinander liegende Werkstückbahnen, entlang derer ein zu bearbeitendes Werkstück gefördert wird. Die Fördervorrichtungen beider Werkstückbahnen haben Werkstückwagen, die das zu bearbeitende Werkstück führen. Diese Werkstückwagen sind unabhängig voneinander in der Längsrichtung der Fertigungszelle verfahrbar. Der Werkzeugträger übergreift oder überragt beide Werkzeugbahnen, sodass die einzelne Werkzeugeinheit sowohl zur Bearbeitung eines Werkstücks auf der ersten Werkstückbahn als auch zur Bearbeitung eines Werkstücks auf der zweiten Werkstückbahn einsetzbar ist. Die Bereitstellung eines zweiten Werkstücks und das Verfahren dieses zweiten Werkstücks in den Arbeitsbereich der Werkzeugmaschine kann während der Bearbeitung eines ersten Werkstücks erfolgen. Da die Bearbeitungsvorgänge an den einzelnen Werkstücken unabhängig voneinander sind, kann auch bei einer Losgröße eins eine hohe Ausbringungsrate erzielt werden.

Die Fertigungszelle kann für eine manuelle oder für eine automatische Werkstückbeschickung und Werkstückentnahme ausgebildet sein. Sie kann im Materialfluss einzeln angeordnet sein oder - bei einer verketteten Fertigung - in eine Fertigungslinie eingebunden sein. Eine derartige verkettete Fertigung kann starr oder flexibel ausgebildet sein. Hierbei kann die Fertigungszelle so ausgebildet sein, dass sie eine Komplettbearbeitung des Werkstücks ohne Umspannung ermöglicht.

Weitere Einzelheiten der Erfindung ergeben sich aus den Unteransprüchen und der nachfolgenden Beschreibung schematisch dargestellter Ausführungsformen.
- Figur 1:: Fertigungszelle;
- Figur 2:: Werkstückbereitstellung;
- Figur 3:: Querschubvorrichtung;
- Figur 4:: Anschlagsleiste;
- Figur 5:: Werkstückwagen;
- Figur 6:: Werkzeugmaschine;
- Figur 7:: Blocksaugergruppe;
- Figur 8:: Werkzeugportal;
- Figur 9:: Variante der Fertigungszelle.

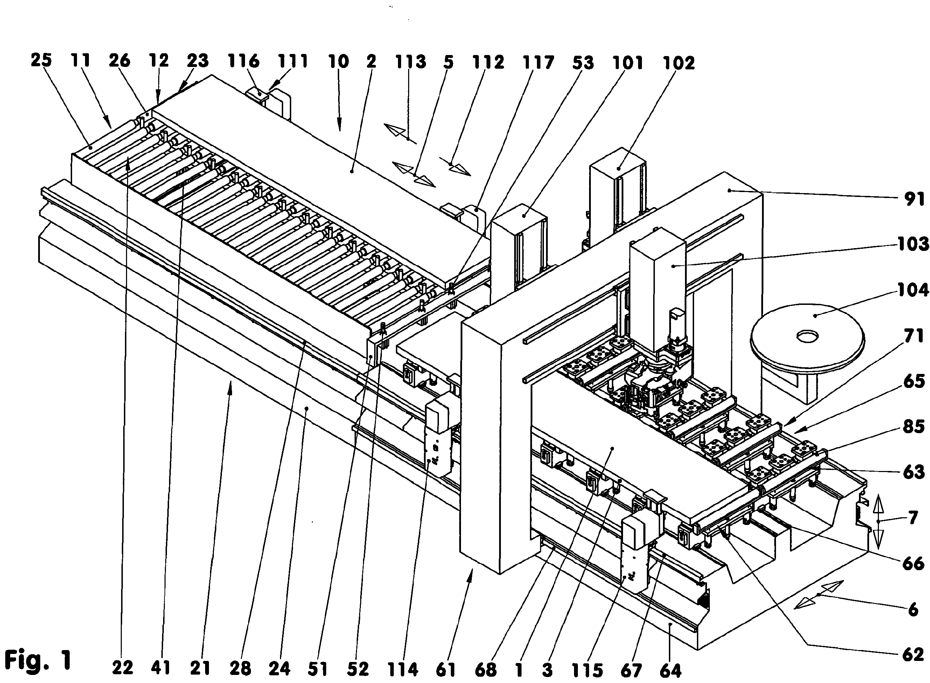

Die Figuren 1 - 8 zeigen eine Fertigungszelle (10) und einige ihrer Baugruppen. Die dargestellte Fertigungszelle (10) umfasst eine Werkstückbereitstellung (21) und eine mit der Werkstückbereitstellung (21) verkettete Werkzeugmaschine (61). Die einzelnen mittels der Werkzeugmaschine (61) zu bearbeitenden Werkstücke (1; 2) werden mittels einer Fördervorrichtung (111) von der Werkstückbereitstellung (21) zur Werkzeugmaschine (61) und zur Werkstückentnahme gefördert. Im Ausführungsbeispiel erfolgt die Werkstückentnahme nach der Bearbeitung in der Werkstückbereitstellung (21). Es ist aber auch denkbar, die jeweilige Werkstückentnahme räumlich getrennt von der Werkstückbereitstellung (21) anzuordnen. Der Transport des Werkstücks (1; 2) von der Werkstückbereitstellung (21) zur Werkzeugmaschine (61) erfolgt in einer ersten Förderrichtung (112). Zur Entnahme wird das Werkstück (1; 2) in diesem Ausführungsbeispiel in einer entgegen dieser ersten Förderrichtung (112) gerichteten zweiten Förderrichtung (113) transportiert. Die Förderrichtungen (112, 113) sind in der Längsrichtung (5) der Fertigungszelle (10) orientiert.

Die Fertigungszelle (10) hat zwei Werkstückbahnen (11, 12). Diese liegen nebeneinander. Sie haben die gleiche Längsrichtung (5). Jede der Werkstückbahnen (11; 12) hat einen Werkstückbereitstellungbereich (22; 23) und einen Arbeitsbereich (62; 63). Der Arbeitsbereich (62; 63) ist hierbei in der Werkzeugmaschine (61) angeordnet. Der jeweilige Arbeitsbereich (62; 63) ist der z.B. quaderförmige Raumbereich, in dem das einzelne Werkstück (1; 2) mit der bearbeitenden Werkzeugeinheit (101 - 104) zusammenwirkt.

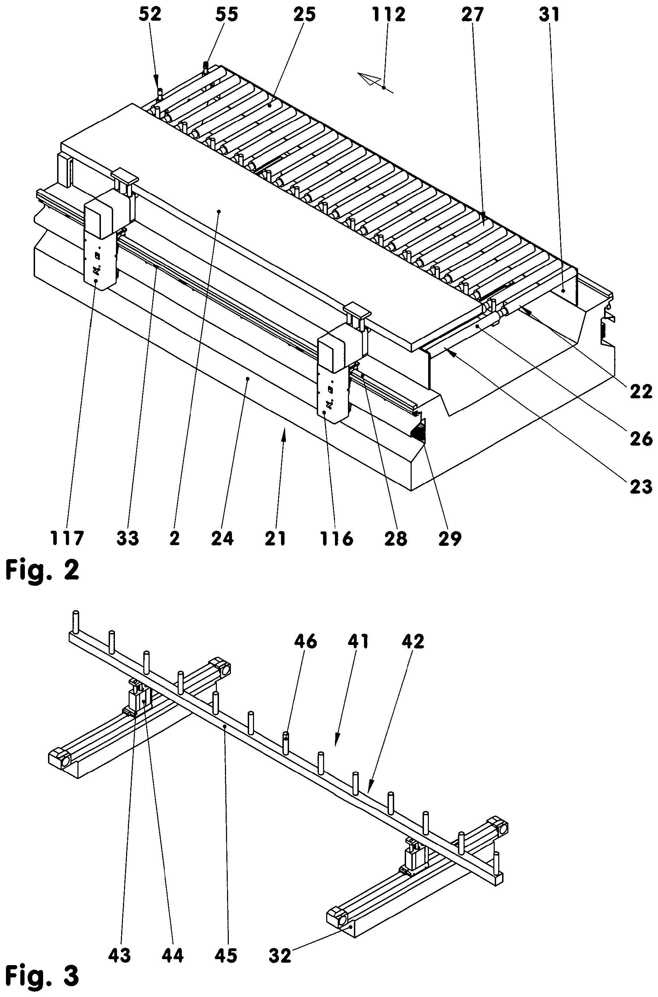

Die Werkstückbereitstellung (21), vgl. Figur 2, umfasst im Ausführungsbeispiel ein Bett (24), das zwei nebeneinanderliegende Tragrollenbahnen (25, 26), eine Querschubvorrichtung (41) und zwei beispielsweise auf einer gemeinsamen Anschlagleiste (51) sitzende Anschlagvorrichtungen (52, 53) trägt. Das Bett (24) hat außenliegende Werkstückwagen-Führungsschienen (28) und Leiterbahnen (29). Diese setzen sich am Maschinenbett (64) der Werkzeugmaschine (61) fort. Entlang der Werkstückwagen-Führungsscheinen (28) sind Werkstückwagen (114 - 117) der Fördervorrichtung (111) verfahrbar. Die Fördervorrichtung (111) umfasst im Ausführungsbeispiel pro Werkstückbahn (11; 12) zwei Werkstückwagen (114, 115; 116, 117). Die Energieversorgung und Steuerung der selbstfahrenden Werkstückwagen (114 - 117) erfolgt mittels der Leiterbahnen (29). Es ist auch denkbar, pro Werkstückbahn (11; 12) nur einen Werkstückwagen (114; 115; 116; 117) einzusetzen.

Die einzelne Tragrollenbahn (25; 26) umfasst mehrere quer zur Förderrichtung (112) und parallel zueinander liegende Tragrollen (27). Diese können starr ausgebildet oder z.B. wälzgelagert auf einer starren Achse angeordnet sein. Im Ausführungsbeispiel sind alle Tragrollen (27) identisch zueinander ausgebildet. Die Breite der einzelnen Tragrolle (27) ist im Allgemeinen größer oder gleich der maximalen Breite eines zu bearbeitenden Werkstücks (1; 2) in der Querrichtung (6). Die Tragrollen (27) überragen die seitlichen, in Längsrichtung (5) orientierten Tragrollenträger (31) in der Höhenrichtung (7).

In der Figur 3 ist eine Querschubvorrichtung (41) dargestellt. Im Ausführungsbeispiel hat diese einen in Querrichtung (6) verfahrbaren Rechen (42). Die Querschubvorrichtung (41) hat zwei im Bett (24) verankerte Querführungen (32), die jeweils einen relativ hierzu verfahrbaren Querschlitten (43) tragen. Der Hub der Querschlitten (43) in der Querrichtung (6) ist beispielsweise um 40 % größer als die Breite einer Tragrollenbahn (25; 26) in dieser Richtung. Die beiden Querschlitten (43) sind beispielsweise synchron zueinander angetrieben.

Auf jedem der Querschlitten (43) sitzt eine Hubvorrichtung (44), die auf einen höhenverstellbaren, in Längsrichtung (5) orientierten Zinkenträger (45) des Rechens (42) wirkt. Beide z.B. hydraulisch betätigten Hubvorrichtungen (44) sind hierbei gekoppelt, sodass der Zinkenträger (45) immer waagerecht steht. Aus dem Zinkenträger (45) ragen nach oben Zinken (46) heraus. Die Zinken (46) sind im Ausführungsbeispiel zylindrische Zapfen. Bei montiertem und angehobenem Rechen (42) stehen die Zinken (46) z.B. zwischen zwei Tragrollen (27) einer Tragrollenbahn (25; 26). Die Hubvorrichtungen (44) sind so ausgebildet, dass bei ausgefahrenen Zinken (46) diese um 70 % des Hubes die Tragebene der Tragrollenbahn (25; 26) überragen. Bei abgesenkter Hubvorrichtung (44) sind die Zinken (46) unterhalb der Tragebene der Tragrollenbahn (25; 26) versenkt. Die die Oberseite der Tragrollenbahn (25; 26) tangierende Tragebene der Tragrollenbahn (25; 26) wird im Folgenden auch als Förderebene der Fertigungszelle (10) bezeichnet. Anstatt eines Rechens (42) kann die Querschubvorrichtung (41) auch einen Schwenkhebel, einen Schubkeil, etc. aufweisen.

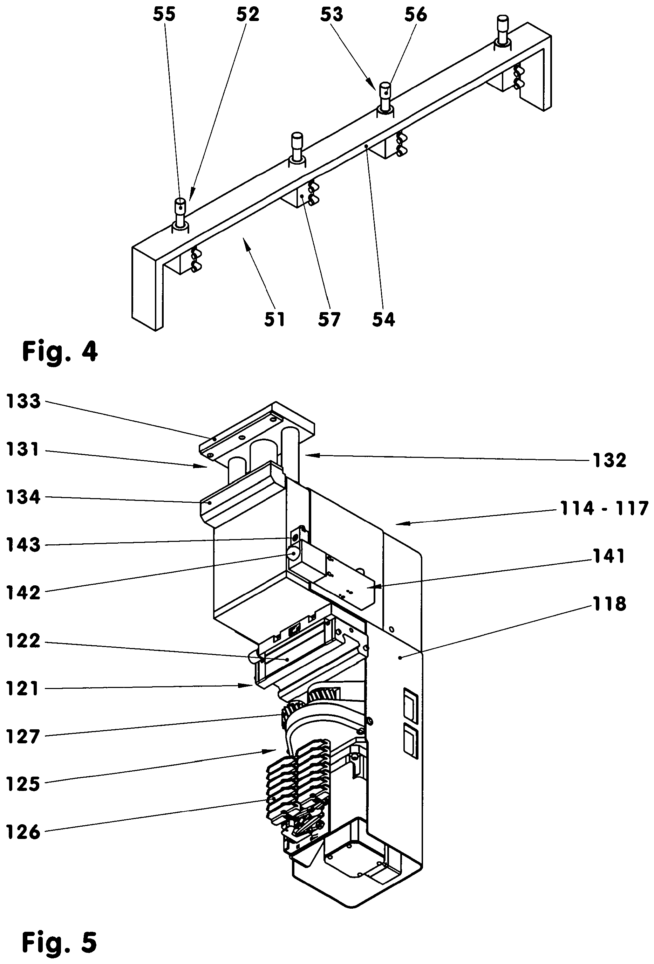

Die Figur 4 zeigt eine Anschlagleiste (51). Diese ist in der Querrichtung (6) orientiert und an dem der Werkzeugmaschine (61) zugewandten Ende der Werkstückbereitstellung (21) angeordnet. Die Anschlagleiste (51) hat einen Zapfenträger (54), der zwei Anschlagvorrichtungen (52, 53) mit jeweils zwei Anschlagzapfen (55; 56) trägt. Jeder Anschlagzapfen (55; 56) ist mittels eines doppeltwirkenden Zylinders (57) zwischen einer eingefahrenen und einer ausgefahrenen Stellung verstellbar. In der dargestellten ausgefahrenen Stellung überragen die Anschlagzapfen (55, 56) mit einer Höhe von 85 % ihres Vertikalhubs die Förderebene. In der eingefahrenen Stellung liegen die Anschlagzapfen (55, 56) unterhalb der Förderebene. Die Hubverstellung der hydraulischen Zylinder (57) erfolgt z.B. gruppenweise pro Anschlagvorrichtung (52; 53).

In der Figur 5 ist ein Werkstückwagen (114; 115; 116; 117) dargestellt. Die im Ausführungsbeispiel dargestellte Fertigungszelle (10) verfügt über vier gleichartige Werkstückwagen (114 - 117). Zwei dieser Werkstückwagen (114, 115) sind entlang der in der Förderrichtung (112) gesehenen rechten Seite der Fertigungszelle (10) geführt, die zwei anderen Werkstückwagen (116, 117) sind entlang der linken Seite geführt. Es können auch mehr oder weniger als die dargestellte Anzahl der Werkstückwagen (114 - 117) eingesetzt werden.

Der einzelne Werkstückwagen (114; 115; 116; 117) verfügt über eine Führungseinheit (121), eine Antriebseinheit (125) und eine Greifeinheit (131). Die genannten Einheiten (121, 125, 131) sind in einem Gehäuse (118) integriert. An der Außenseite des Gehäuses (118) ist im Ausführungsbeispiel eine Andockkupplung (141) angeordnet.

Die Führungseinheit (121) umfasst einen Kugelumlaufschuh (122), der bei montiertem Werkstückwagen (114; 115; 116; 117) die Werkstückwagen-Führungsschiene (28) der Werkstückbereitstellung (21) und/oder die Werkstückwagen-Führungsschiene (67) Werkzeugmaschine (61) umgreift. Die Werkstückwagen-Führungsschienen (28, 67) sind hierbei in der Längsrichtung (5) orientiert auf dem Bett (24) der Werkstückbereitstellung (21) bzw. auf dem Maschinenbett (64) der Werkzeugmaschine (61) befestigt.

Die Antriebseinheit (125) verfügt über eine Energie- und Signalversorgung (126). Diese liegt bei montiertem Werkstückwagen (114; 115; 116; 117) federbelastet an den Leiterbahnen (29) des Betts (24) bzw. des Maschinenbetts (64) an. Ein im Werkstückwagen (114; 115; 116; 117) angeordneter Antriebsmotor treibt ein Antriebsrad (127) an, das bei montiertem Werkstückwagen (114; 115; 116; 117) mit einer seitlich am Bett (24) bzw. am Maschinenbett (64) befestigten Zahnstange (33) kämmt.

Die Greifeinheit (131) ist oberhalb der Führungseinheit (121) angeordnet. Sie umfasst eine Parallelgreifvorrichtung (132) mit zwei relativ zueinander beweglichen Klemmbacken (133, 134). Im Ausführungsbeispiel sind beide Klemmbacken (133, 134) relativ zum Gehäuse (118) des Werkstückwagens (114; 115; 116; 117) verfahrbar. Die Öffnungs- und die Schließrichtung der Parallelgreifvorrichtung (132) ist in der Höhenrichtung (7) orientiert. Auch eine Höhenverstellung der gesamten Greifeinheit (131) relativ zur Führungseinheit (121) ist denkbar. Hierbei können auch beide Klemmbacken (133, 134) einzeln angetrieben höhenverstellbar sein.

Die Greifeinheit (131) kann auch asymmetrisch ausgebildet sein. So kann beispielsweise die untere Klemmbacke (134) einen geringeren Hub aufweisen als die obere Klemmbacke (133).

Die Andockkupplung (141) hat beispielsweise einen ausfahrbaren Stößel (142) und einen Stecker (143). Der Stecker (143) kann zur Übertragung elektrischer Energie, von Daten und/oder von Medien z.B. Druckluft für pneumatische Funktionen eingesetzt werden. An die Andockkupplung (141) ist im Ausführungsbeispiel eine Blocksaugergruppe (71) der Werkzeugmaschine (61) ankuppelbar. Der einzelne Werkstückwagen (114; 115; 116; 117) kann auch ohne die Andockkupplung (141) ausgebildet sein.

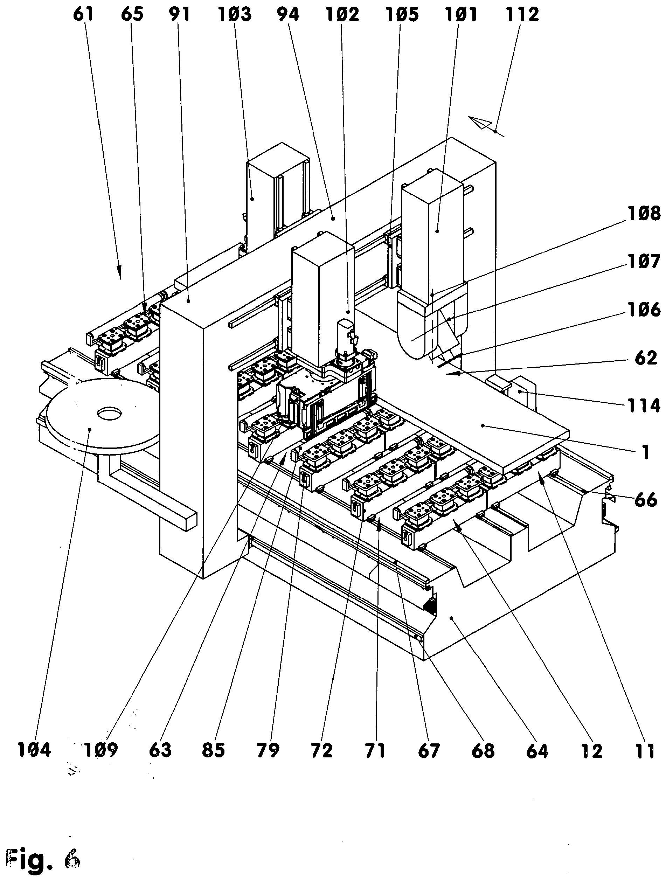

Die Figur 6 zeigt die Werkzeugmaschine (61) der Fertigungszelle (10). In dem Maschinenbett (64) sind zwei Werkstücktische (65) nebeneinander angeordnet. Die Trennfuge der beiden Werkstücktische (65) verläuft in der vertikalen Mittenlängsebene des Maschinenbetts (64). Jeder der Werkstücktische (65) umfasst mehrere Blocksaugergruppen (71). Die einzelnen Blocksaugergruppen (71) sind in der Längsrichtung (5) verfahrbar im Maschinenbett (64) geführt. Das Maschinenbett (64) hat hierfür in der Längsrichtung (5) orientierte Blocksauger-Führungsbahnen (66). Weiterhin kann im Maschinenbett (64) eine Spanabfuhrvorrichtung angeordnet sein.

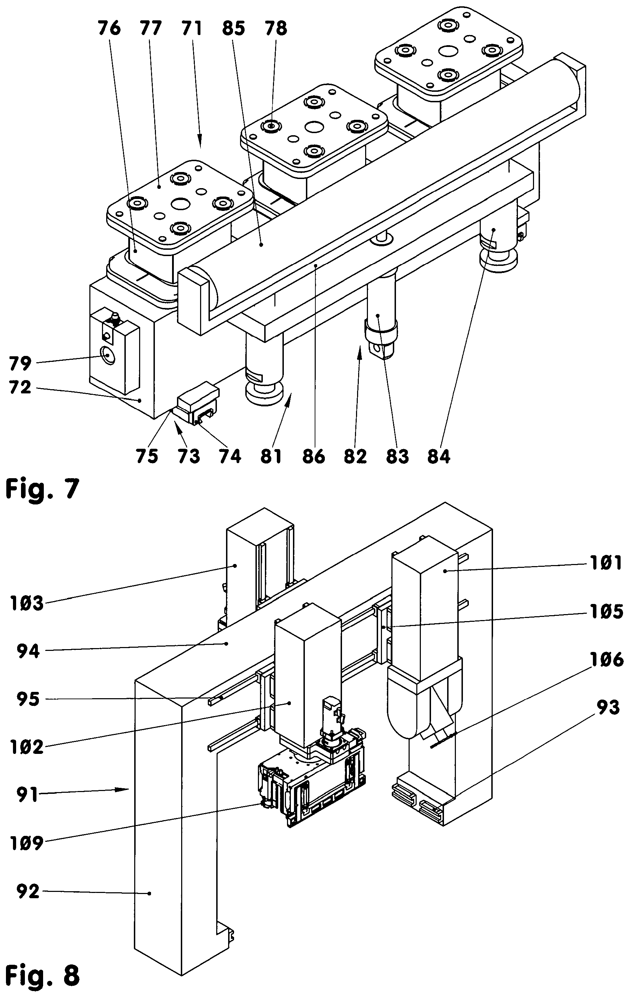

In der Figur 7 ist eine Blocksaugergruppe (71) dargestellt. Alle Blocksaugergruppen (71) sind beispielsweise gleichartig aufgebaut. Die einzelne Blocksaugergruppe (71) hat einen Tragbalken (72) mit zwei Führungsgruppen (73) zur Führung entlang des Maschinenbetts (64). Die einzelne Führungsgruppe (73) hat zwei in der Längsrichtung (5) voneinander beabstandete Führungsschuhe (74), zwischen denen eine hydraulisch oder pneumatisch lösbare Klemmvorrichtung (75) sitzt. Diese z.B. federbelastet schließende Klemmvorrichtung (75) sichert die Lage der Blocksaugergruppe (71) relativ zum Maschinenbett (64) in der Längsrichtung (5).

Der Tragbalken (72) ist in der Querrichtung (6) orientiert. Er trägt beispielsweise drei nebeneinander sitzende Saugelemente (76). Diese haben eine annährend rechteckige Ansaugfläche (77) mit vier Saugnäpfen (78). Die Saugelemente (76) sind im Ausführungsbeispiel einzeln höhenverstellbar ausgebildet. Sie können aber auch starr ausgebildet sein. Jedes Saugelement (76) und/oder jeder Saugnapf (78) ist einzeln mit Unterdruck ansteuerbar.

Am Tragbalken (72) ist eine Stützvorrichtung (81) angeordnet. Diese Stützvorrichtung (81) hat eine Hubvorrichtung (82), die einen zentralen Hubzylinder (83) und zwei Führungszylinder (84) aufweist. Die Hubvorrichtung (82) trägt eine querliegende Stützrolle (85). Die Stützrolle (85) ist beispielsweise in einem U-förmigen Stützträger (86) drehbar gelagert. Auch eine starre Anordnung der einzelnen Stützrolle (85) ist denkbar. Die Hubvorrichtung (82) ist derart ausgebildet, dass die parallel zur Förderebene liegende, die obenliegende Mantellinie der Stützrolle (85) tangierende Stützebene von einer unterhalb der Ansaugfläche (77) liegenden Bereitschaftslage in eine oberhalb der Ansaugfläche (77) liegende Stützlage verstellbar ist.

An der Stirnseite des Tragbalkens (72) ist eine Tragbalkenkupplung (79) angeordnet. Diese ist beispielsweise komplementär zur Andockkupplung (141) der Werkstückwagen (114 - 117) ausgebildet.

Unterhalb der Werkstückwagen-Führungsschienen (67) sind an der Außenseite des Maschinenbetts (64) Portalführungsschienen (68) angeordnet. Die Portalführungsschienen (68) führen einen Werkzeugträger (91) in der Bauform eines Werkzeugportals (91), das im Ausführungsbeispiel drei Werkzeugeinheiten (101; 102; 103) trägt. Das Werkzeugportal (91) ist mittels einer hier nicht dargestellten Antriebsvorrichtung in der Längsrichtung (5) entlang des Maschinenbetts (64) verfahrbar. Die Antriebsvorrichtung des Werkzeugportals (91) kann beispielsweise so ausgebildet sein wie die Antriebseinheit (125) der Werkstückwagen (114 - 117). Aber auch ein Antrieb mittels einer Kugelgewindetriebs, eines Rädergetriebes, etc. ist denkbar. Gegebenenfalls kann die jeweilige Position des Werkzeugportals (91) mittels einer Klemmvorrichtung gesichert sein. Das Werkzeugportal (91) übergreift beide Werkstückbahnen (11, 12). Es steht hierbei im Ausführungsbeispiel außerhalb der Werkstückwagen (114 - 117), sodass diese ungehindert innerhalb des Werkzeugportals (91) verfahren können.

Die Figur 8 zeigt das Werkzeugportal (91). Das Werkzeugportal (91) hat einen u-förmig ausgebildeten Portalträger (92). An den freien Enden des Portalträgers (92) sind z.B. Kugelumlaufschuhe (93) angeordnet, die die Portalführungsschienen (68) umgreifen. Der obenliegende Zentralbalken (94) des Portalträgers (92) trägt die Werkzeugeinheiten (101 - 103). Hierfür hat der Zentralbalken (94) in Querrichtung (6) verlaufende Trag- und Führungsschienen (95). Die Trag- und Führungsschienen (95) sind an beiden in der Längsrichtung (5) zeigenden Stirnseiten des Zentralbalkens (94) angeordnet. Jede der dargestellten Werkzeugeinheiten (101 - 103) ist auf diesen Trag- und Führungsschienen (95) mittels eines Kreuzschlittens (105) gelagert. Die einzelne Werkzeugeinheit (101 - 103) ist damit in Querrichtung (6) und in der normal zur Förderebene orientierten Höhenrichtung (7) verfahrbar. Jede der Werkzeugeinheiten (101 - 103) kann zusätzlich relativ zum Werkzeugportal (91) in der Längsrichtung (5) verfahrber ausgebildet sein. Alle Werkzeugeinheiten (101 - 103) können Werkstücke (1; 2) auf beiden Werkstückbahnen (11, 12) bearbeiten.

Der Werkzeugträger (91) kann auch L-förmig ausgebildet sein. Er ist dann einseitig am Maschinenbett (64) z.B. verfahrbar gelagert und überragt auskragend beide Werkstückbahnen (11, 12). Bei einer derartigen Ausführungsform verfahren die Werkstückwagen (114, 115; 116, 117)) mindestens einer Werkstückbahn (11; 12) zwischen dem Maschinenbett (64) und dem Werkzeugträger (91).

Die im Ausführungsbeispiel dargestellten Werkzeugeinheiten (101 - 103) sind ein 5-Achs-Kopf (101), ein Bohraggregat (102) und ein Verleimaggregat (103). Der 5-Achs-Kopf (101) trägt im Ausführungsbeispiel einen angetriebenen Scheibenfräser (106), der um eine waagerecht liegende Schwenkachse (107) schwenkbar ist. Weiterhin ist diese Einheit um eine Vertikalachse (108) schwenkbar oder drehbar.

Das Bohraggregat (102) hat mehrere Bohr- uns Fräswerkzeuge (109), die beispielsweise einzeln in Eingriff mit dem Werkstück bringbar sind. Das Bohraggregat (102) ist beispielsweise um eine vertikale Achse schwenkbar ausgebildet.

Auf der dem 5-Achs-Kopf (101) und dem Bohraggregat (102) abgewandten Seite des Werkzeugportals (91) trägt dieses das Verleimaggregat (103). Mittels des Verleimaggregats (103) ist beispielsweise eine Werkstückbeschichtung auf das Werkstück (1; 2) fügbar.

Am Werkstückportal (91) ist weiterhin ein Kantenleimer (104) angeordnet. Hiermit können die Kanten des Werkstücks (1; 2) beschichtet werden.

In der Fertigungszelle (10) ist beispielsweise zunächst in der Werkstückbereitstellung (21) kein Werkstück (1; 2) bereitgestellt. Mindestens zwei Werkstückwagen (114, 115; 116, 117) stehen einseitig im Bereich der Werkstückbereitstellung (21). Die Greifeinheiten (131) dieser Werkstückwagen (114, 115; 116, 117) sind geöffnet. Der Rechen (42) der Querschubvorrichtung (41) ist abgesenkt. Ein erstes Werkstück (1; 2) wird z.B. mittels einer Hallenfördervorrichtung in der Werkstückbereitstellung (21) abgelegt. Dieses erste Werkstück (1; 2) ist z.B. plattenförmig ausgebildet. Es besteht beispielsweise aus Holz, Kunststoff, Aluminium, Stahl, einem Verbundwerkstoff, etc. Das abgelegte Werkstück (1; 2) wird beim Ablegen z.B. nur grob orientiert. Beispielsweise kann die Werkstücklängsrichtung um 30 Grad von der Längsrichtung (5) der Fertigungszelle (10) abweichen.

Nach dem Ablegen des ersten Werkstücks (1; 2) verfährt der Rechen (42) in der Querrichtung (6) so weit, bis er auf der den Werkstückwagen (114, 115; 116, 117) abgewandten Seite des Werkstücks (1; 2) steht. Anschließend heben die Hubvorrichtungen (44) den Zinkenträger (45) und die Zinken (46) an, bis die Zinken (46) über die Förderebene herausragen. Nun kann der Rechen (42) das erste Werkstück (1; 2) in Richtung der Greifeinheiten (131) der Werkstückwagen (114, 115; 116, 117) verschieben, bis das Werkstück (1; 2) zwischen den Klemmbacken (133, 134) liegt. Hierbei wird das Werkstück (1; 2) so ausgerichtet, das die in den Greifeinheiten (131) aufgenommene Werkstücklängsseite (3) in der Längsrichtung (5) der Fertigungszelle (10) orientiert ist.

Auch eine manuelle Beschickung und/oder Ausrichtung des Werkstücks (1; 2) ist denkbar. Hierbei wird das auf den Tragrollen (27) abgelegte Werkstück (1; 2) vom Bediener zu den Werkstückwagen (114, 115; 116, 117) der zur Bearbeitung vorgesehenen Werkstückbahn (11; 12) geschoben.

Nach dem Schließen der Greifeinheiten (131) ziehen die Werkstückwagen (114, 115; 116, 117) das Werkstück (1; 2) entlang der Tragrollen (27) in der Förderrichtung (112), bis das Werkstück (1; 2) an mindestens einem Anschlagzapfen (55; 56) der Werkstückbahn (11; 12) anliegt. Es ist auch denkbar, dass beim Schließen der Greifeinheiten (131) das Werkstück (1; 2) von der Tragrollenbahn (25; 26) um einen geringen Betrag, z.B. weniger als fünf Millimeter, abgehoben wird. Beispielsweise liegt es dann parallel zur Förderebene. Aus der Werkstücklage an der Anschlagvorrichtung (52; 53) und der Lage der Werkstückwagen (114, 115; 116, 117) relativ zum Bett (24) in der Längsrichtung (5) kann die Lage des Werkstücks (1; 2) relativ zu den Werkstückwagen (114, 115; 116, 117) ermittelt werden.

In der Werkzeugmaschine (61) werden beispielsweise mittels freier Werkstückwagen (114, 115; 116, 117) oder mittels Einstellwagen die Lage der Blocksaugergruppen (71) in der Längsrichtung (5) eingestellt. Beim Einsatz von Einstellwagen sind diese beispielsweise so aufgebaut wie die Werkstückwagen (114 - 117), haben jedoch keine Greifeinheit (131). Zum Einstellen der einzelnen Blocksaugergruppe (71) koppelt ein Werkstückwagen (114; 115; 116; 117) mittels der Andockkupplung (141) mit einer Blocksaugergruppe (71). Die Klemmung der Blocksaugergruppe (71) an der Blocksauger-Führungsbahn (66) wird gelöst und der Werkstückwagen (114; 115; 116; 117) verfährt die Blocksaugergruppe (71) werkstückspezifisch in die gewünschte Position. Weiterhin werden diejenigen Saugelemente (76) abgesenkt, die in dem zu bearbeitenden Bereich des Werkstücks (1; 2) liegen. Damit wird beispielsweise eine Beschädigung der Blocksaugergruppe (71) während einer spanabhebenden Bearbeitung des Werkstücks (1; 2) verhindert. Anschließend wird der Werkstückwagen (114; 115; 116; 117) von der Blocksaugergruppe (71) abgekoppelt und die Klemmvorrichtung (75) der Blocksaugergruppe (71) am Maschinenbett (64) aktiviert.

Die Einstellung der Blocksaugergruppen (71) kann auch mittels den das Werkstück (1; 2) fördernden Werkstückwagen (114, 115; 116, 117) erfolgen. Hierzu wird beispielsweise nach dem Ablegen des Werkstücks (1; 2) auf den Stützrollen (85) die Greifeinheit (131) eines Werkstückwagens (114; 115; 116; 117) geöffnet, während mindestens ein anderer Werkstückwagen (115; 114; 117; 116) das Werkstück (1; 2) hält. Mittels des freien Werkstückwagens (114; 115; 116; 117) kann nun eine oder können mehrere der Blocksaugergruppen (71) eingestellt werden. Nach erneutem Klemmen des Werkstücks (1; 2) mittels dieses Werkstückwagens (114; 115; 116; 117) kann ein anderer Werkstückwagen (115; 114; 117; 116) zum Einstellen weiterer Blocksaugergruppen (71) eingesetzt werden.

Die Blocksaugergruppen (71) können auch relativ zum Maschinenbett (64) einzeln verfahrbar sein. Hierzu verfügt beispielsweise jede Blocksaugergruppe (71) über eine Antriebseinheit, die z.B. an einer maschinenbettseitigen Zahnstange abwälzt. Bei einer derartigen Ausführungsform können die Andockkupplungen (141) der Werkstückwagen (114; 115; 116; 117) und die Tragbalkenkupplungen (79) der Blocksaugergruppen (71) entfallen. Beispielsweise erfolgt das Einstellen der Blocksaugergruppen (71) in der Längsrichtung (5) werkstückspezifisch während des Ausrichtens des zu bearbeitenden Werkstücks (1; 2) in der Werkstückbereitstellung (21).

Nach dem Absenken der Anschlagzapfen (55; 56) der ersten Werkstückbahn (11; 12) verfahren die Werkstückwagen (114, 115; 116, 117) das erste Werkstück (1; 2) weiter in der Förderrichtung (112) zur Werkzeugmaschine (61). Hier werden die Werkstückwagen (114, 115; 116, 117) angehalten, sodass das Werkstück (1; 2) auf den Stützrollen (85) an der vorgesehenen Position im jeweiligen Arbeitsbereich (62; 63) der Werkzeugmaschine (61) liegt. Anschließend werden beispielsweise die vorgesehenen Saugelemente (76) angehoben und/oder die Stützrollen (85) abgesenkt, bis das Werkstück (1; 2) auf den vorgesehenen Saugelementen (76) aufliegt. Die Stützrollen (85) werden weiter abgesenkt, bis sie unterhalb des Arbeitsbereichs (62; 63) der Werkzeugeinheiten (101 - 103) stehen.

Es ist auch denkbar, nach der Positionierung der Werkstückwagen (114, 115; 116, 117) die Stützrollen (85) anzuheben, sodass nach einem Öffnen der Greifelemente (131) das jeweilige Werkstück (1; 2) auf den Stützrollen (85) liegt. Anschließend werden die Stützrollen (85) mittels der Stützrollen-Hubvorrichtungen (82) abgesenkt, bis sie unterhalb der Stützebene stehen. Hierbei wird das Werkstück (1; 2) auf den Saugelementen (76) abgelegt. Die z.B. höhenverstellbaren Greifeinheiten (131) können hierbei weiterhin das Werkstück (1; 2) halten.

Mittels einer Vakuumpumpe, die auf die vom Werkstück (1; 2) verdeckten und am Werkstück (1; 2) anliegenden Saugnäpfe (78) wirkt, wird das erste Werkstück (1; 2) in der Bearbeitungsposition fixiert. Hierbei werden beispielsweise mit zunehmenden Unterdruck die Hubvorrichtungen der Greifeinheiten (131) abgesenkt. Nach dem Fixieren des Werkstücks (1; 2) mittels der Saugelemente (76) können die Greifeinheiten (131) gegebenenfalls vom Werkstück (1; 2) gelöst werden. Das Werkstück (1; 2) kann nun mittels der Werkzeugeinheiten (101 - 103) und des Kantenleimers (104) bearbeitet werden. Hierbei können zur Bearbeitung eines Werkstücks (1; 2) beispielsweise alle am Werkzeugportal (91) angeordneten Werkzeugeinheiten (101 - 103) und der Kantenleimer (104) eingesetzt werden. Beispielsweise ist es denkbar, das Werkstück (1; 2) in einer Aufspannung komplett zu bearbeiten.

Während der Bearbeitung des ersten Werkstücks (1; 2) kann ein zweites Werkstück (2; 1) bereitgestellt werden. Hierfür werden die Werkstückwagen (116, 117; 114, 115) der zweiten Werkstückbahn (12; 11) eingesetzt. Die Bereitstellung des zweiten Werkstücks (2; 1) erfolgt, wie oben im Zusammenhang mit dem ersten Werkstück (1; 2) beschrieben. Das zweite Werkstück (2; 1) kann bereits während der Bearbeitung des ersten Werkstücks (1; 2) in den Arbeitsbereich (63; 62) verfahren werden. Auch ein anderer Ablauf der Bereitstellung und der Bearbeitung der Werkstücke (1; 2) ist denkbar.

Nach der Bearbeitung des ersten Werkstücks (1; 2) wird die Vakuumpumpe beispielsweise abgeschaltet und der Druck an den Ansaugflächen (77) auf den Umgebungsdruck erhöht. Die Greifelemente (131) greifen das Werkstück (1; 2) oder halten weiterhin das gegriffene Werkstück (1; 2). Die Stützrollen (85) werden angehoben und/oder die Saugelemente (76) werden abgesenkt, bis die Stützebene oberhalb der Saugelemente (76) liegt. Die Werkstückwagen (114, 115; 116,117) verfahren das bearbeitete Werkstück (1; 2) beispielsweise in der zweiten Förderrichtung (113) zur Werkstückentnahme, die im Ausführungsbeispiel im Werkstückbereitstellungsbereich (22; 23) erfolgt. Es ist auch denkbar, das bearbeitete Werkstück (1; 2) in der ersten Förderrichtung (112) weiter z.B. zu einer weiteren Fertigungszelle zu fördern.

Bei Anordnung der Fertigungszelle (10) in einer verketten Fertigung ist es denkbar, die Greifeinheiten (131) während der gesamten Bearbeitung am Werkstück (1; 2) zu halten. Damit kann eine erneute Positionierung des Werkstücks in einer nachfolgenden Fertigungszelle (10) entfallen.

Das erste Werkstück (1) und das zweite Werkstück (2) können auch parallel zueinander bearbeitet werden. Beispielsweise bei identischen Arbeitsgängen kann das Werkstückportal (91) zwei gleich ausgebildete Werkzeugeinheiten (101, 101; 102, 102; 103, 103) aufweisen. Auch ist es denkbar, dass beispielsweise an einem Werkstück (1; 2) eine Fräsbearbeitung durchgeführt wird, während am anderen Werkstück (2; 1) eine Bohreinheit z.B. intermittierend eingesetzt wird.

Das zu bearbeitende Werkstück (1; 2) kann auch breiter als eine einzelne Werkstückbahn (11; 12) sein. Beispielsweise ragt es dann in die andere Werkstückbahn (12; 11) hinein. Die Bearbeitung eines derartigen Werkstücks (1; 2) erfolgt, wie oben beschrieben. Das nachfolgende Werkstück (2; 1) wird in diesem Fall erst dann in den Arbeitsbereich (62; 63) verfahren, wenn das vorhergehende Werkstück (1; 2) beide Arbeitsbereiche (62; 63) verlassen hat.

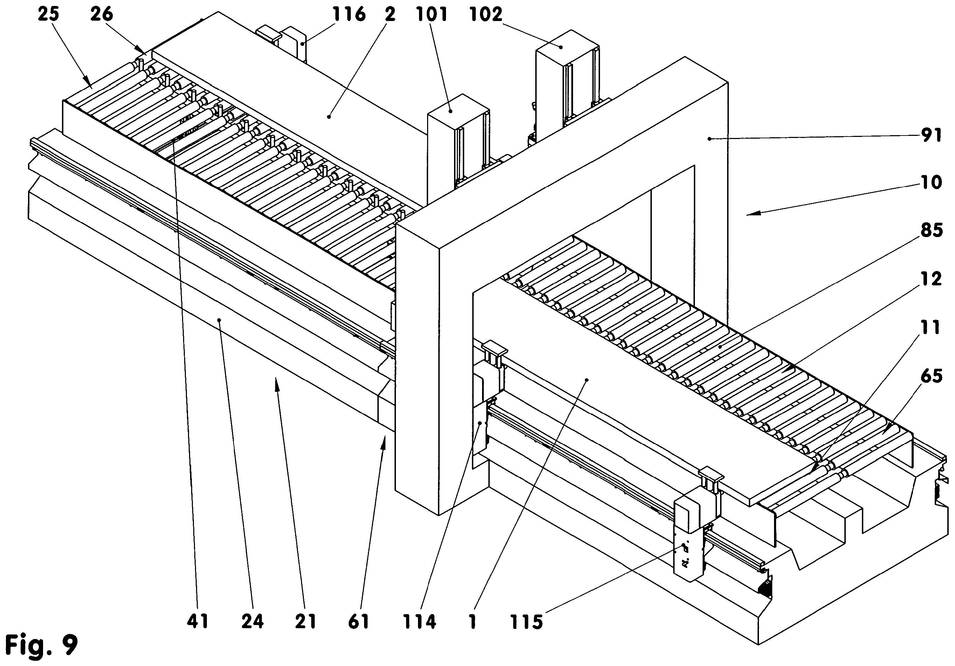

Die Figur 9 zeigt eine Variante einer Fertigungszelle (10). Diese hat wie die in den Figuren 1 - 8 dargestellte Fertigungszelle (10) zwei Werkstückbahnen (11, 12). Die Werkstückbereitstellung (21) ist beispielsweise identisch aufgebaut, wie im Zusammenhang mit dem ersten Ausführungsbeispiel beschrieben.

Die Werkstückwagen (114 - 117) können mit Greifeinheiten (131) ausgerüstet sein, deren untere Klemmbacke (134) relativ zum Gehäuse (118) ortsfest angeordnet ist. Die Klemmebene dieser unteren Klemmbacke (134) liegt beispielsweise in der Förderebene. Die obere Klemmbacke (133) ist relativ zu dieser unteren Klemmbacke (134) einstellbar.

Die Werkzeugmaschine (61) dieses Ausführungsbeispiels hat einen feststehenden Werkzeugträger (91) in der Bauform eines Werkzeugportals (91), das die Werkzeugeinheiten (101, 102) trägt. Auch in diesem Ausführungsbeispiel kann der Werkzeugträger (91) L-förmig ausgebildet sein. Der Werkstücktisch (65) besteht aus Stützrollen (85), die parallel zueinander in der Längsrichtung versetzt zueinander angeordnet sind. Die obenliegende Tangentialebene der Stützrollen (85) fällt beispielsweise mit der Förderebene zusammen. Senkrecht unterhalb der aktiven Werkzeuge der Werkzeugeinheiten (101, 102) ist z.B. eine Lücke zwischen den Stützrollen (85). Auch in diesem Ausführungsbeispiel können sowohl die Tragrollen (27) als auch die Stützrollen (85) starr oder drehbar ausgebildet sein.

Die Bereitstellung der Werkstücke (1, 2) erfolgt, wie oben beschrieben. Das von den Werkstückwagen (114, 115; 116, 117) aufgenommene Werkstück (1; 2) wird beispielsweise entlang der Förderebene in der Förderrichtung (112) in die Werkzeugmaschine (61) gefördert. Während der Bearbeitung liegt das Werkstück (1; 2) auf den Stützrollen (85) auf. Die Werkzeugeinheiten (101, 102) verfahren auch in diesem Ausführungsbeispiel zumindest in der Querrichtung (6), in der Höhenrichtung (7) und in der Längsrichtung (5) relativ zum Werkstück (1; 2). Für die Relativbewegung in der Längsrichtung (5) ist das Werkstück (1; 2) mittels der Werkstückwagen (114, 115; 116, 117) relativ zum Maschinenbett (64) verfahrbar.

In diesem Ausführungsbeispiel können zwei auf den nebeneinanderliegenden Werkstückbahnen (11, 12) liegende Werkstücke (1, 2) zeitlich parallel zueinander mit unterschiedlichen Arbeitsgängen bearbeitet werden.

Das Fördern der bearbeiteten Werkstücke (1, 2) erfolgt, wie oben beschrieben. Gegebenenfalls kann in der Werkstückbereitstellung (21) ein z.B. in einer ersten Aufspannung bearbeitetes Werkstück (1; 2) mittels der Querschubvorrichtung (41) auf die jeweils andere Werkstückbahn (12; 11) verschoben werden, um dort mittels einer weiteren Werkzeugeinheit (102; 101) weiterbearbeitet zu werden.

### Bezugszeichenliste:

- 1: Werkstück, erstes Werkstück
- 2: Werkstück, zweites Werkstück
- 3: Werkstücklängsseite

- 5: Längsrichtung
- 6: Querrichtung
- 7: Höhenrichtung

- 10: Fertigungszelle
- 11: Werkstückbahn, erste Werkstückbahn
- 12: Werkstückbahn, zweite Werkstückbahn

- 21: Werkstückbereitstellung
- 22: Werkstückbereitstellungsbereich
- 23: Werkstückbereitstellungsbereich
- 24: Bett
- 25: Tragrollenbahn
- 26: Tragrollenbahn
- 27: Tragrollen
- 28: Werkstückwagen-Führungsschienen
- 29: Leiterbahnen

- 31: Tragrollenträger
- 32: Querführungen
- 33: Zahnstange

- 41: Querschubvorrichtung
- 42: Rechen
- 43: Querschlitten
- 44: Hubvorrichtung
- 45: Zinkenträger
- 46: Zinken

- 51: Anschlagleiste
- 52: Anschlagvorrichtung
- 53: Anschlagvorrichtung
- 54: Zapfenträger
- 55: Anschlagzapfen
- 56: Anschlagzapfen
- 57: Zylinder, doppeltwirkend

- 61: Werkzeugmaschine
- 62: Arbeitsbereich
- 63: Arbeitsbereich
- 64: Maschinenbett
- 65: Werkstücktische
- 66: Blocksauger-Führungsbahnen
- 67: Werkstückwagen-Führungsschienen
- 68: Portalführungsschienen

- 71: Blocksaugergruppe
- 72: Tragbalken
- 73: Führungsgruppen
- 74: Führungsschuhe
- 75: Klemmvorrichtung
- 76: Saugelemente
- 77: Ansaugfläche
- 78: Saugnapf
- 79: Tragbalkenkupplung

- 81: Stützvorrichtung
- 82: Hubvorrichtung
- 83: Hubzylinder
- 84: Führungszylinder
- 85: Stützrolle
- 86: Stützträger

- 91: Werkzeugträger, Werkzeugportal
- 92: Portalträger
- 93: Kugelumlaufschuhe
- 94: Zentralbalken
- 95: Trag- und Führungsschienen

- 101: Werkzeugeinheit, 5-Achs-Kopf
- 102: Werkzeugeinheit, Bohraggregat
- 103: Werkzeugeinheit, Verleimaggregat
- 104: Kantenleimer
- 105: Kreuzschlitten
- 106: Scheibenfräser
- 107: Schwenkachse
- 108: Vertikalachse
- 109: Bohr- und Fräswerkzeuge

- 111: Fördervorrichtung
- 112: Förderrichtung, erste Förderrichtung
- 113: zweite Förderrichtung
- 114: Werkstückwagen
- 115: Werkstückwagen
- 116: Werkstückwagen
- 117: Werkstückwagen
- 118: Gehäuse

- 121: Führungseinheit
- 122: Kugelumlaufschuh

- 125: Antriebseinheit
- 126: Energie- und Signalversorgung
- 127: Antriebsräder

- 131: Greifeinheit
- 132: Parallelgreifvorrichtung
- 133: Klemmbacke, oben
- 134: Klemmbacke, unten

- 141: Andockkupplung
- 142: Stößel
- 143: Stecker

## Patentansprüche

1. Fertigungszelle (10) mit einer, einen mindestens zwei Werkzeugeinheiten (101, 102; 102, 103; 101, 103; 101, 101; 102, 102) tragenden Werkzeugträger (91) aufweisenden und zwei nebeneinander liegende, in einer Längsrichtung (5) orientierte Werkstückbahnen (11, 12) umfassenden Werkzeugmaschine (61), wobei die Werkzeugeinheiten (101; 102; 103) relativ zu einem Maschinenbett (64) der Werkzeugmaschine (61) zumindest in einer normal zur Längsrichtung (5) orientierten Querrichtung (6) und in einer normal zu diesen beiden Richtungen (5, 6) orientierten Höhenrichtung (7) verfahrbar sind, wobei pro Werkstückbahn (11, 12) mindestens ein Werkstückwagen (114; 115; 116; 117) der Werkstückbahn (11; 12) in der Längsrichtung (5) entlang der Werkzeugmaschine (61) verfahrbar ist und wobei die Werkzeugeinheiten (101, 102; 102, 103; 101, 103; 101, 101; 102, 102) in der Längsrichtung (5) relativ zum Maschinenbett (64) und/oder relativ zu den Werkstückwagen (114, 115; 116, 117) verfahrbar sind,
- wobei der Werkzeugträger (91) die jeweils einen Werkstückbereitstellungsbereich (22; 23) einer Werkstückbereitstellung (21) und einen Arbeitsbereich (62; 63) der Werkzeugmaschine (61) aufweisenden Werkstückbahnen (11, 12) überragt oder übergreift,
- wobei die Werkzeugeinheiten (101; 102; 103) sowohl zur Bearbeitung eines Werkstücks (1; 2) auf der ersten Werkstückbahn (11) als auch zur Bearbeitung eines Werkstücks (2; 1) auf der zweiten Werkstückbahn (12) einsetzbar ist,
- wobei die Werkstückwagen (114; 115; 116; 117) in der Längsrichtung (5) zusätzlich entlang der Werkstückbereitstellung (21) verfahrbar sind und
- wobei die Werkstückbereitstellung (21) pro Werkstückbahn (11; 12) mindestens eine absenkbare oder abkippbare Anschlagvorrichtung (52; 53) hat.

2. Fertigungszelle (10) nach Anspruch 1, **dadurch gekennzeichnet, dass** beide Werkstückbereitstellungbereiche (22, 23) eine gemeinsame, absenkbare Querschubvorrichtung (41) aufweisen.

3. Fertigungszelle (10) nach Anspruch 1, **dadurch gekennzeichnet, dass** zumindest der Werkstückwagen (114 - 117) einer Werkstückbahn (11; 12) zwischen dem Maschinenbett (64) und dem Werkzeugträger (91) verfahrbar ist.

4. Fertigungszelle (10) nach Anspruch 1, **dadurch gekennzeichnet, dass** der Werkzeugträger (91) als Werkzeugportal (91) ausgebildet ist.

5. Fertigungszelle (10) nach Anspruch 1, **dadurch gekennzeichnet, dass** jeder Werkstückwagen (114; 115; 116; 117) eine Antriebseinheit (125) und eine Greifeinheit (131) zum Greifen eines Werkstücks (1; 2) aufweist.

6. Fertigungszelle (10) nach Anspruch 1, **dadurch gekennzeichnet, dass** in jedem Arbeitsbereich (62; 63) der Werkzeugmaschine (61) ein Werkstücktisch (65) mit Stützrollen (85) angeordnet ist.

7. Fertigungszelle (10) nach Anspruch 6, **dadurch gekennzeichnet, dass** zumindest eine Stützrolle (85) Teil einer Blocksaugergruppe (71) mit höhenverstellbaren Saugelementen (76) ist.

8. Fertigungszelle (10) nach Anspruch 7, **dadurch gekennzeichnet, dass** die Blocksaugergruppe (71) in der Längsrichtung (5) verfahrbar ist.

9. Fertigungszelle (10) nach Anspruch 1, **dadurch gekennzeichnet, dass** der Werkzeugträger (91) relativ zum Maschinenbett (64) in der Längsrichtung (5) verfahrbar ist.

## Claims

1. A manufacturing cell (10) having a machine tool (61), which has a tool carrier (91) bearing at least two tool units (101, 102; 102, 103; 101, 103; 101, 101; 102, 102) and comprises two workpiece tracks (11, 12), which are situated next to one another and are oriented in a longitudinal direction (5), wherein the tool units (101; 102; 103) are movable relative to a machine bed (64) of the machine tool (61) at least in a transverse direction (6) oriented normally to the longitudinal direction (5) and in a vertical direction (7) oriented normally to these two directions (5, 6), wherein, per workpiece track (11, 12), at least one workpiece carriage (114; 115; 116; 117) of the workpiece track (11; 12) is movable along the machine tool (61) in the longitudinal direction (5), and wherein the tool units (101, 102; 102, 103; 101, 103; 101, 101; 102, 102) are movable in the longitudinal direction (5) relative to the machine bed (64) and/or relative to the workpiece carriages (114, 115; 116, 117),
- wherein the tool carrier (91) protrudes or extends over the workpiece tracks (11, 12), which each have a workpiece-providing region (22; 23) of a workpiece-providing system (21) and a working region (62; 63) of the machine tool (61),
- wherein the tool units (101; 102; 103) can be used both for processing a workpiece (1; 2) on the first workpiece track (11) and for processing a workpiece (2; 1) on the second workpiece track (12),
- wherein the workpiece carriages (114; 115; 116; 117) are additionally movable in the longitudinal direction (5) along the workpiece-providing system (21), and
- wherein the workpiece-providing system (21) has at least one lowerable or tiltable stop device (52; 53) per workpiece track (11; 12).

2. The manufacturing cell (10) according to Claim 1, **characterised in that** both workpiece-providing regions (22, 23) have a common, lowerable transverse pushing device (41).

3. The manufacturing cell (10) according to Claim 1, **characterised in that** at least the workpiece carriage (114 - 117) of one workpiece track (11; 12) is movable between the machine bed (64) and the tool carrier (91).

4. The manufacturing cell (10) according to Claim 1, **characterised in that** the tool carrier (91) is designed as a tool gantry (91).

5. The manufacturing cell (10) according to Claim 1, **characterised in that** each workpiece carriage (114; 115; 116; 117) has a drive unit (125) and a gripping unit (131) for gripping a workpiece (1; 2).

6. The manufacturing cell (10) according to Claim 1, **characterised in that** a workpiece table (65) having supporting rollers (85) is arranged in each working region (62; 63) of the machine tool (61).

7. The manufacturing cell (10) according to Claim 6, **characterised in that** at least one supporting roller (85) is part of a block sucker group (71) with height-adjustable suction elements (76).

8. The manufacturing cell (10) according to Claim 7, **characterised in that** the block sucker group (71) is movable in the longitudinal direction (5).

9. The manufacturing cell (10) according to Claim 1, **characterised in that** the tool carrier (91) is movable in the longitudinal direction (5) relative to the machine bed (64).

## Revendications

1. Cellule de fabrication (10), pourvue d'une machine-outil (61) comportant un porte-outils (91) portant au moins deux unités d'outils (101, 102 ; 102, 103 ; 101, 103 ; 101, 101 ; 102, 102) et comprenant deux trajets (11, 12) de pièces à usiner, situés côte à côte, orientés dans une direction longitudinale (5), les unités d'outils (101 ; 102 ; 103) étant déplaçables par rapport à un bâti de machine (64) de la machine-outil (61), au moins dans une direction transversale (6) orientée à la normale de la direction longitudinale (5) et dans une direction en hauteur (7) orientée à la normale desdites deux directions (5, 6), par trajet (11, 12) de pièces à usiner, au moins un chariot de transport (114 ; 115 ; 116 ; 117) de pièces à usiner du trajet (11 ; 12) de pièces à usiner étant déplaçable dans la direction longitudinale (5), le long de la machine-outil (61) et les unités d'outils (101, 102 ; 102, 103 ; 101, 103 ; 101, 101 ; 102, 102) étant déplaçables dans la direction longitudinale (5) par rapport au bâti de machine (64) et / ou par rapport aux chariots de transport (114, 115 ; 116, 117) des pièces à usiner,
- le porte-outils (91) saillant au-delà des trajets (11, 12) de pièces à usiner comportant chacun une zone (22 ; 23) de mise à disposition de pièces à usiner d'une mise à disposition (21) de pièces à usiner et d'une zone de travail (62 ; 63) de la machine-outil (61) ou les chevauchant,
- les unités d'outil (101 ; 102 ; 103) étant utilisables aussi bien pour l'usinage d'une pièce à usiner (1 ; 2) sur le premier trajet (11) de pièces à usiner, qu'également pour l'usinage d'une pièce à usiner (2 ; 1) sur le deuxième trajet (12) de pièces à usiner,
- dans la direction longitudinale (5), les chariots de transport (114 ; 115 ; 116 ; 117) de pièces à usiner étant déplaçables additionnement le long de la mise à disposition (21) de pièces à usiner et
- la mise à disposition (21) de pièces à usiner disposant par trajet (11 ; 12) de pièces à usiner d'au moins un dispositif de butée (52 ; 53) susceptible d'être abaissé ou basculé vers le bas.

2. Cellule de fabrication (10) selon la revendication 1, **caractérisée en ce que** les deux zones (22, 23) de mise à disposition de pièces à usiner comportent un dispositif de poussée transversale (41) commun, susceptible d'être abaissé.

3. Cellule de fabrication (10) selon la revendication 1, **caractérisée en ce qu'**au moins le chariot de transport (114 à 117) de pièces à usiner d'un trajet (11 ; 12) de pièces à usiner est déplaçable entre le bâti de machine (64) et le porte-outils (91).

4. Cellule de fabrication (10) selon la revendication 1, **caractérisée en ce que** le porte-outils (91) est conçu sous la forme d'un portique à outils (91).

5. Cellule de fabrication (10) selon la revendication 1, **caractérisée en ce que** chaque chariot de transport (114 ; 115 ; 116 ; 117) de pièces à usiner comporte une unité d'entraînement (125) et une unité de préhension (131), destinée à prendre une pièce à usiner (1 ; 2).

6. Cellule de fabrication (10) selon la revendication 1, **caractérisée en ce que** dans chaque zone de travail (62 ; 63) de la machine-outil (61) est placée une table (65) porte-pièces munie de galets d'appui (85).

7. Cellule de fabrication (10) selon la revendication 6, **caractérisée en ce qu'**au moins un galet d'appui (85) est partie intégrante d'un groupe (71) de blocs de bridage, muni d'éléments aspirants (76) ajustables en hauteur.

8. Cellule de fabrication (10) selon la revendication 7, **caractérisée en ce que** le groupe (71) de blocs de bridage est déplaçable dans la direction longitudinale (5) .

9. Cellule de fabrication (10) selon la revendication 1, **caractérisée en ce que** le porte-outils (91) est déplaçable par rapport au bâti de machine (64) dans la direction longitudinale (5).
